# EUROPEAN PATENT SPECIFICATION

(11) **EP 0 687 716 B1**
(45) Date of publication and mention of the grant of the patent: **07.10.1998**
(21) Application number: 95304049.0
(22) Date of filing: 13.06.1995
(51) Int. Cl.: C09D 5/44, C08F 8/32

(54) **Microgel-containing anionic water-dispersible resin composition and electrodeposition coating composition containing the same**
Mikrogel enthaltende anionische wasserdispergierbare Harzzusammensetzung und Zusammensetzung für Elektrotauchlackierung, welche diese enthält
Composition de résine dispersable dans l'eau renfermant un microgel anionique et composition de revêtement par électrodéposition en contenant

(30) Priority: 16.06.1994 JP 159266/94
(43) Date of publication of application: 20.12.1995
(73) Proprietor: Shinto Paint Co., Ltd., Amagasaki, Hyogo-ken (JP)
(72) Inventor: Kubo, Akira, c/o Shinto Paint Co., Ltd., Amagasaki, Hyogo-ken (JP); Inoue, Shinichi, c/o Shinto Paint Co., Ltd., Amagasaki, Hyogo-ken (JP); Ishii, Shunji, c/o Shinto Paint Co., Ltd., Amagasaki, Hyogo-ken (JP)
(74) Representative: Davies, Jonathan Mark

(56) References cited:
- EP-A- 0 199 087
- EP-A- 0 276 655
- EP-A- 0 358 358
- EP-A- 0 410 925
- EP-A- 0 555 774
- BE-A- 682 737
- US-A- 3 668 183
- DATABASE WPI Section Ch, Week 9013, Derwent Publications Ltd., London, GB; Class A82, AN 90095409 & JP-A-2 047 171 (NIPPON OILS & FATS KK) 16 February 1990

## Description

The present invention relates to a microgel-containing anionic water-dispersible resin composition and also to an electrodeposition coating composition containing said resin composition.

Electrodeposition coating agent containing microgel has been used already as an antisag agent and a matting agent for a highsolid paint, as a matting agent for electrodeposition coating agent and as a rheological controlling agent for preventing an edge rust.

With respect to such a microgel, that which utilizes alkoxysilane group is disclosed in the Japanese Patent Kokai No. 67396/84, No. 315451/89 and No. 269780/90.

However, such a microgel uses a hydrolyzable alkoxysilane group and, therefore, it is apt to be affected by moisture. Thus, an anionic water-dispersible resin composition using said microgel is apt to be affected by humidity in air upon drying and, in addition, an electrodepositon coating agent containing the above has a difficulty in treating the water marks formed as a result of washing with water after the electrodeposition coating step.

In order to solve such problems, the present inventors have carried out an extensive study and found a microgel-containing anionic water-dispersible resin composition which is not affected by humidity, is not affected by water marks as a result of washing with water after electrodeposition coating when used as an electrodeposition coating composition and is applicable as an aqueous paint and a highsolid paint as well and an electrodeposition coating composition containing said composition whereupon the present invention has been achieved.

Thus, the present invention is a microgel-containing anionic water-dispersible resin composition comprising (A) a synthesic resin having acetoacetyl groups and carboxyl groups, (B) amine and water and (C) aldehyde and also is an electrodeposition coating composition containing said resin composition.

The composition of the present invention can be used as an ultraviolet setting electrodeposition coating composition and its effect can be further potentiated by the joint use with pigments, dyes and coloring matters if necessary.

The present invention is to offer such a microgel-containing anionic water-dispersible resin composition and an electrodeposition coating composition containing said resin composition.

The present invention will be further illustrated as hereunder.

There is no particular limitation for the synthetic resin (A) used in the present invention although the use of acryl resin, fluororesin, polyester resin, etc. is particularly preferred.

when the synthetic resin which is a component (A) is an acryl resin, it can be manufactured either by:
[1] a method in which a polymerization is carried out using (a) an α,β-ethylenically unsaturated monomer having an acetoacetyl group, (b) an α,β-ethylenically unsaturated monomer having an acidic group and (c) a monomer which is copolymerizable with them; or by
[2] a method in which (a) an α,β-ethylenically unsaturated monomer having an acidic group, (b) an α,β-ethylenically unsaturated monomer having a hydroxyl group and (c) a monomer which is copolymerizable with them are previously polymerized and then (d) an acetoacetylation is carried out with diketene or acetoacetyl ester utilizing the hydroxyl groups in said polymer.

After that, the acidic groups in the resulting acryl resin are neutralized, diluted and dispersed using a component (B) and then an aldehyde which is a component (C) represented by formalin is added thereto and, as a result of a condensation with the introduced said acetoacetyl group, microgel particles which are electrodepositable in water are manufactured.

More detailed description for the above-mentioned manufacturing methods will be given as hereunder.
[1] (a). A representative example of the α,β-ethylenically unsaturated monomer is acetoacetoxyethyl methacrylate having the following formula (1): 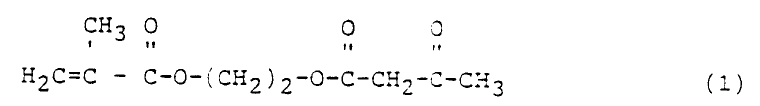
   Besides the above, acetoacetoxyethyl acrylate, acetoacetoxypropyl (meth)acrylate, acetoacetoxybutyl (meth)acrylate are useful and, in addition, derivatives prepared by modifying hydroxyethyl (meth)acrylate with a lactcne followed by acetoacetylation may be utilized as well.
   Suitable amount of the acetoacetyl group in 100 g of all monomers is from 5 to 100 millimoles. When it is less than 5 millimoles, degree of crosslinking of the resulting microgel particles is low while, when it is more than 100 millimoles, smoothness of the resulting coated film is insufficient.
[1](b). Common examples of the α,β-ethylenically unsaturated monomer having an acidic group are methacrylic acid and acrylic acid and, in addition, maleic acid, maleic acid anhydride, fumaric acid, itaconic acid, etc. may be used as well. Furthermore, monomers having an acidic group other than a carboxyl group such as acrylamido-tert-butylsulfanic acid having the following chemical formula (2): 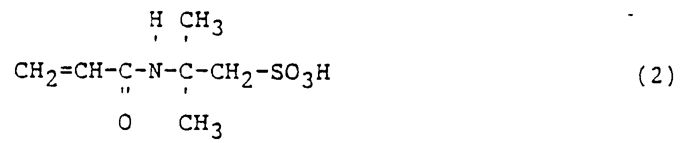 and mono(2-acryloyloxyethyl) acid phosphate having the following chemical formula (3): 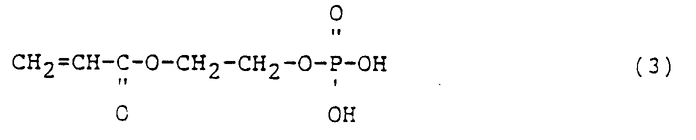 may be used as well.

Such a monomer having an acidic group as mentioned above may be used either solely or jointly if desired. It is, however, necessary that an acid value of 10-200 (mg of KOH per gram of the resin solid) is achieved.

When the acid value is less than 10 (mg KOH/g resin solid), stability of the aqueous dispersion after neutralization with an amine is insufficient while, when it is more than 200 (mg KOH/g resin), electrophoreticability is inferior and, in addition, properties such as an alkali resistane become low.

The compound of [1](c) is a monomer which is polymerizable with the above-mentioned (a) and (b) and will be exemplified below. Such α,β-ethylenically unsaturated monomers may be suitably selected depending upon the required quality such as hardness, softness and weathering resistance although it is suitable that the monomer having a hydroxyl group is used within a range from 30 to 230 (mg KOH/g resin solid) in terms of a hydroxyl group value as a functional group during a setting condensation at a baking step and also due to a solubility in water.

Examples of such an α,β-ethylenically unsaturated monomer applicable in the present invention are aromatic vinyl monomers such as styrene and vinyltoluene; alkyl (meth)acrylates such as methyl acrylate, ethyl acrylate, butyl acrylate, hexyl acrylate, cyclohexyl acrylate, methyl methacrylate and ethyl methacrylate as well as derivatives thereof; (meth)acrylic acid amides and derivatives thereof; acrylonitrile; and methacrylonitrile. Moreover, polyfunctional monomers such as divinylbenzene, trimethylolpropane tri(meth)acrylate, etc. may be used if necessary too.

Examples of an α,β-ethylenically unsaturated monomers containing a hydroxyl group are 2-hydroxyethyl acrylate, 2-hydroxyethyl methacrylate, 2-hydroxypropyl (meth)acrylate, 4-hydroxybutyl (meth)acrylate and the lactone modified products thereof.

Suitable examples of an α,β-ethylenically unsaturated monomer having an acidic group, i.e. [2](a) in the above-mentioned method [2], are same as the monomers as exemplified for the above [1](b). With respect to the acid value, that is same as well.

Examples of an α,β-ethylenically unsaturated monomer containing a hydroxyl group of [2](b) are above-mentioned 2-hydroxyethyl (meth)acrylate, 2-hydroxypropyl (meth)acrylate, 4-hydroxybutyl (meth)acrylate and the lactone modified products thereof.

With respect to the hydroxyl value, 30-230 (mg KOH/g resin solid) is suitable as same as above although, with respect the hydroxyl value which is consumed as a result of acetoacetylation, it is necessary to consider in previously taking it outside the range of 30-230 (mg KOH/g resin solid).

A substance [2](c) is a monomer which is polymerizable with [2] (a) and (b) and its examples are aromatic vinyl monomers, alkyl (meth)acrylates and derivatives thereof and (meth)acrylic amides and derivatives thereof as mentioned in the above [1](c). In addition, polyfunctional monomers such as divinylbenzene and trimethylolpropane tri(meth)acrylate may be used if necessary.

With respect to a method for polymerizing the monomers of [1] (a), (b) and (c) and that for polymerizing the monomers of [2] (a), (b) and (c), the applicable means are known methods, solution polymerization, emulsion polymerization or suspension polymerization and, in the case of [2], solution polymerization is particularly preferred. Catalyts for the polymerization may be suitably selected from known ones such as azo substances (e.g. azobisisobutyronitrile) and peroxide substances (e.g. benzoyl peroxide).

Further, it is useful for keeping the water dispersibility of the resulting polymer in a good state to add alcohols such as ethanol, propanol and butanol and glycol ethers such as ethyleneglycol monobutyl ether and ethyleneglycol dimethyl ether.

The substance [2](d) is a compound which acetoacetylates the hydroxyl groups in the resin synthesized from [2] (a), (b) and (c) using diketene or acetoacetyl esters.

Examples of such a compound are methyl acetoacetate having the following chemical formula (4): 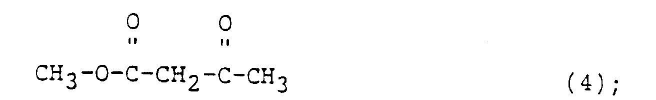 ethyl acetoacetate having the following chemical formula (5): 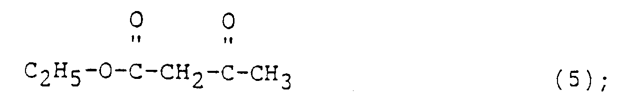 and tert-butyl acetoacetate having the following chemical formula (6):

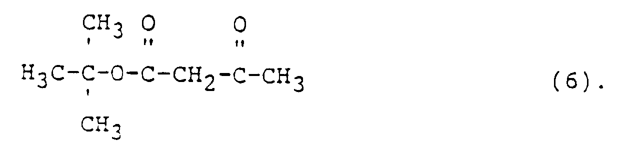

With respect to the solvent used for this acetoacetylation, a solvent which is inert for the acetoacetylation should be selected and, after completion of the acetoacetylation, a solvent containing a hydroxyl group may be used if necessary.

The acryl resin containing acetoacetyl and carboxyl groups prepared as such may be mixed, for example, with amino resin, xylene resin, epoxy resin, polyester resin, etc. if necessary depending upon the requested property, operability, cost, etc. and then it may be subjected to the next neutralization and dilution with water. Mixing of such a miscible resin therewith after the neutralization and the dilution with water may also be carried out if necessary.

When the synthetic resin of the component (A) is a fluororesin, it is possible to use a fluororesin into which carboxyl groups are introduced using acrylic acid, vinyl acetate or allyloxy acetate as disclosed in the Japanese Patent Kokai No. 289874/89 or to use a fluororesin into which carboxyl groups are introduced by the reaction of a hydroxyl-containing fluororesin with a dibasic acid anhydride as disclosed in the Japanese Patent Kokai No. 136605/83 or No. 41223/94 and then those hydroxyl groups are acetoacetylated.

Suitable acid value of such a carboxyl-containig fluororesin is 10-200 (mg KOH/g resin solid). When the acid value is less than 10 (mg KOH/g resin solid), a sufficient water dispersibility is not resulted after neutralization with an amine while, when it is more than 200 (mg KOH/g resin solid), the electrophoreticability is inferior and its properties such as an alkali resistance lowers as well.

Suitable hydroxyl value after the hydroxyl groups are consumed as a result of an acetoacetylation is 30-230 (mg KOH/g resin solid).

It is necessary to previously consider in making the hydroxyl value consumed by an acetoacetylation outside 30-230 (mg KOH/g resin solid).

Further, it is useful to add a solvent so that a water dispersibility of the fluororesin is maintained in a good state.

With respect to such a solvent, that which is inert to the acetoacetylation should be selected and, to be more specific, glycol ethers such as ethylene glycol dimethyl ether, ethylene glycol diethyl ether, diethylene glycl dimethyl ether and diethylene glycol diethyl ether are preferred. After completion of the acetoacetylation, a hydroxyl-containing solvent such as ethylene glycol monoethyl ether may be used if necessary.

Then the hydroxyl groups contained in the synthesized fluororesin are acetoacetylated with the same compound as that used for acryl resin whereupon a fluororesin containing acetoacetyl and carboxyl groups can be prepared.

When the synthetic resin which is a component (A) is a polyester resin, it is prepared by polymerizing a polycarboxylic acid (a) with a polyhydric alcohol (b) by a conventional method followed by acetoacetylating the hydroxy groups therein.

Examples of the polycarboxylic acid (a) are terephthalic acid, isophthalic acid, phthalic anhydride, hexahydrophthalic anhydride, trimellitic anhydride, maleic anhydride and succinic anhydride. Monocarboxylic acid may be used partially. They may be used either solely or jointly as a mixture of two or more.

Examples of the polyhydric alcohol (b) are ethylene glycol, propylene glycol, diethylene glycol, diallyl alcohol, glycerol, trimethylolpropane, trimethylolethane, pentaerythritol and bisphenol A as well as cresol derivatives, phenol derivatives and epoxy resins which are derivatives of bisphenol A. Monohydric alcohol may be used partially. They may be used either solely or jointly as a mixture of two or more.

The polyester resins as referred to herein which include the polyester resin obtained by a polymerization using the above-mentioned mentioned compositions, the acryl-modified polyester resin obtained by an addition polymerization of various unsaturated monomers wherein unsaturated mono- and polycarboxylic acid or unsaturated mono- and polyhydric alcohol is partially used and the polyester resin obtained by a modification of hydroxyl groups in the polyester resin with various isocyanate compounds may also include those which are prepared, for example, by a transesterification of linseed oil, coconut oil, etc. with various carboxylic acids or various alcohols. It is preferred that the hydroxyl value after consumption of the hydroxyl group by an acetoacetylation is 30-230 (mg KOH/g resin solid). It is necessary to previusly consider in making the hydroxyl values consumed by an acetoacetylation outside 30-230 (mg KOH/g resin solid). With respect to an acid value, the suitable range is 10-200 (mg KOH/g resin solid). When the acid value is less than 10 (mg KOH/g resin solid), sufficient water dispersibility after the neutralization is not resulted while, when it is more than 200 (mg KOH/g resin solid), the properties such as an alkali resistance become no good.

Further, it is useful to add a solvent so that the water dispersibility of the polyester resin is maintained in a good state. With respect to a solvent therefor, that which is inert during the acetoacetylation should be selected and, to be more specific, suitable examples thereof are glycol ethers such as ethylene glycol dimethyl ether, ethylene glycol diethyl ether, diethylene glycol dimethyl ether and diethylene glycol diethyl ether. After completion of the acetoacetylation, a hydroxyl-containing solvent such as ethylene glycol monoethyl ether may be used if necessary.

Then the hydroxyl groups in the synthesized polyester resin are acetoacetylated by the same compound used in the case of the acryl resin whereupon a polyester resin containing acetoacetyl and carboxyl groups is prepared.

The amine used as a component (B) is used for dispersing the component (A) in water by means of neutralization or for making it soluble in water and its examples are alkyl- and alkanolamines such as monoethylamine, diethylamine, triethylamine, diethanolamine and diisopropanolamine. Other examples are cyclic amines such as pyridine and ammonia. In some cases, an inorganic alkali such as KOH and NaOH may be used as well. Useful degree of neutralization to said carboxylic acid is 0.3-1.5 equivalents. When it is less than 0.3 equivalent, a dispersion in water is difficult while, when it is more than 1.5 equivalents, the electrophoreticability is no good and that is not preferred.

Preferred water used here is a deionized water. It is also a useful method wherein a deionized water which is previously mixed with a predetermined amount of the above-mentioned amine is used.

In addition, a method wherein a resin liquid is poured into an aqueous amine or a method wherein a neutralized resin is poured into water may be used when necessary.

The higher the degree of neutralization by the amine and the higher the degree of dilution by the deionized water, the smaller the particle size of the resulting microgel particles. Further, various surface-active agents such as anioic and nonionic ones may be added, if necessary, for controlling the particle size and also for making the dispersion stable.

Now, an explanation will be made for the component (C). The resin particles which are dispersed in water by the components (A) and (B) are subjected to a crosslinking condensation with the aldehyde of the component (C) whereupon microgel particles are produced. Useful examples of the aldehyde are formalin and formalin condensate such as paraform. Other examples of applicable aldehyde are aliphatic ones such as acetaldehyde, propionaldehyde and butyraldehyde; aromatic ones such as benzaldehyde; and aldehyde condensates such as glyoxal. It is recommended to add 0.1-10 moles or, preferably, 0.2-2 moles of it to one mole of said acetoacetyl group.

In the present invention, the microgel-containing anionic water-dispersible resin composition of the present invention is manufactured as mentioned hereinabove and, in order to afford preferred microgels, it is necessary to conduct an aging under the following condition. Although the condition is to be suitably selected, the advantageous condition in an industrial scale is that the temperature is 5-100°C (preferably 20-100°C) while the time is 5 minutes to 48 hours (preferably 30 minutes to 3 hours) and the reacticn is conducted with stirring by conventional means.

The aqueous dispersion of the microgel-containing anionic water-dispersible resin composition prepared as such is used as an electrodeposition paint as it is or said aqueous dispersion is made into a matting agent or a rheological controlling agent followed by mixing with a lustrous electrodeposition paint.

Examples of the lustrous electrodeposition paint applicable are anionic electrodeposition paints which have been known already in the art such as the electrodeposition coating compositions of acryl-melamine type, acryl-isocyanate type, fluorine-melamine type and fluorine-isocyanate type.

The electrodeposition coating composition of the present invention may contain colored pigment, body pigment, flow agent for film surface, etc. if necessary.

The electrodesposition coating composition of the present invention is usually adjusted to contain about 3-20% by weight or, preferably, about 5-15% by weight of the resin solid and is subjected to an electrodeposition coating.

With respect to a method and a device used for conducting an electrodeposition coating using the electrodeposition coating composition of the present invention, the method and the device which have been known *per se* used for conventional anodic electrodeposition coating may be used. Preferably, the applicable contact coating condition is usually that an electrodeposition is conducted at a bath temperature of 20-30°C, voltage of 100-400 volts (preferably 100-300 volts) and a turning-on time of 30 seconds to ten minutes. The dry coated film thickness is believed to be usually sufficient when it is within a range of about 2-50 µm or, preferably, 5-30 µm.

Examples of the material to be coated by the electrodeposition are the materials having electroconductivity such as iron, steel, copper, aluminum, plated steel board prepared by plating the steel surface with zinc, tin, chromium, aluminum, etc. and metal material prepared by subjecting the steel surface to a chemical or electrolytic treatment using chromic acid, phosphoric acid, etc. Preferred material among them is aluminum which is subjected to an anodic oxidation in various shapes such as plate or rod or in an enamalled form.

The electrodeposition coating film formed on the material to be coated is taken out from an electrodeposition bath, an excessive amount of the paint sticked on the said electrodeposited film is washed with water or with water which is permeated by means of a reverse osmosis and then it is baked usually at about 150-220°C (preferably at about 160-200°C) for about 10-60 minutes (preferably about 20-40 minutes).

### (Examples)

The present invention will be further illustrated by way of the following examples.

Manufacturing Example of an Acryl Resin (a-1) Containing Acetoacetyl and Carboxyl Groups.

A reaction device equipped with stirrer, thermometer, monomer dropping apparatus and a reflux condenser was prepared.

| | | |
|---|---|---|
| (1) | Diethylene glycol dimethyl ether | 75.0 parts by wt |
| (2) | Ethylene glycol dimethacrylate | 0.2 part by wt |
| (3) | n-Butyl acrylate | 12.7 parts by wt |
| (4) | Methyl methacrylate | 24.3 " |
| (5) | Styrene | 30.0 " |
| (6) | 2-Hydroxyethyl acrylate | 23.5 " |
| (7) | Acrylic acid | 6.4 " |
| (8) | Azobisisobutyronitrile | 1.0 parts by wt |
| (9) | Azobisisobutyronitrile | 0.2 " |
| (10) | tert-Butyl acetoacetate | 4.6 parts by wt |

(1) was charged in a reaction device, heated up to 90°C with stirring and a homogenenous mixture of (2)-(8) previously prepared was dropped thereinto during three hours. The temperature during this period was kept at 90 ± 3°C. After 1.5 hours from the completion of the dropping, (9) was poured therein, a reaction was continued by heating at 90 ± 3°C for 1.5 hours more, temperature of the mixture was raised up to 135°C, (10) was poured thereinto, the mixture was kept at 135 ± 3°C for two hours, tert-butanol was evaporated therefrom and the residue was cooled.

A transparent and viscous resin liquid with a resin solid content of 56.3% and an acid value of 50 (mg KOH/g resin solid) was obtained.

Manufacturing Example for an Acryl Resin (a-2) Having Acetoacetyl and Carboxyl Groups.

A reaction device equipped with stirrer, thermometer, monomer dropping apparatus and reflux condenser was prepared.

| | | |
|---|---|---|
| (1) | Isopropyl alcohol | 75.0 parts by wt |
| (2) | Ethylene glycol dimethacrylate | 0.2 part by wt |
| (3) | n-Butyl methacrylate | 12.7 parts by wt |
| (4) | Methyl methacrylate | 24.3 " |
| (5) | Styrene | 30.0 " |
| (6) | 2-Hydroxyethyl acrylate | 20.0 " |
| (7) | Acetoacetoxyethyl methacrylate | 6.4 " |
| (8) | Acrylic acid | 6.4 " |
| (9) | Azobisisobutyronitrile | 1.0 part by wt |
| (10) | Azobisisoburytonitrile | 0.2 " |

(1) was charged in a reaction device, heated to a refluxing temperature with stirring and the mixture of (2)-(9) which were previously mixed homogeneously was dropped thereinto during three hours. The temperature was kept at 90 ± 3°C during that period. After 1.5 hours from the completion of the dropping, (10) was poured thereinto and the mixture was made to react at 90 ± 3°C for another 1.5 hours followed by cooling.

A transparent and viscous resin liquid with a resin content of 56.5% and an acid value of 52 (mg KOH/g resin solid) was obtained.

Manufacturing Example of a Fluororesin (a-3) Having Acetoacetyl and Carboxyl Groups.

The following fluororesin was manufactured by a method of introducing carboxyl group into a fluororesin as a result of a reaction with a dibasic acid anhydride as disclosed in the Japanese Patent Kokai No. 41223/94.

Thus, a fluororesin-containing polymer with a hydroxyl value of 145 (mg KOH/g resin solid) comprising chlorotrifluoroethylene, cyclohexyl vinyl ether, ethyl vinyl ether and hydroxybutyl vinyl ether was prepared. Then it was made to react with hexahydrophthalic anhydride in a xylene solution to give a fluororesin having hydroxyl and carboxyl groups. The solvent for the resulting fluorine resin was exchanged from xylene to diethylene glycol dimethyl ether and the resin solid amount was adjusted to 50.5%. The product was a viscous resin liquid wherein the resin was with an acid value of 50 (mg KOH/g resin solid) and a hydroxyl value of 113 (mg KOH/g resin solid).

Then 173.3 parts by weight of this fluororesin were acetoacetylated with 4.6 parts by weight of tert-butyl acetoacetate using the same device and operations as in the case of manufacture of (a-1) to give a transparent and viscous resin liquid with a resin solid amount of 56.3% and an acid value of 49 (mg KOH/g resin solid).

Manufacturing Example of a Polyester Resin (a-4) Having Acetoacetyl and Carboxyl Groups.

Isophthalic acid, adipic acid, fumaric acid, neopentyl glycol and trimethylolpropane were charged in a reaction device equipped with a water separator and a dehydrating condensation was carried out by a known method to give a polyester resin.

The product was a transparent and viscous resin liquid with a solid content of 56.7%, an acid value of 54 (mg KOH/g resin solid), a hydroxyl value of 115 (mg KOH/g resin solid) and a number average molecular weight of 23,500.

Then 173.3 parts by weight of the resulting polyester resin were acetoacetylated with 4.6 parts by weight of tert-butyl acetoacetate using the same device and operations as in the case of manufacture of (a-1) to give a transparent and viscous resin liquid with a resin solid content of 56.5% and an acid value of 51 (mg KOH/g resin solid).

Manufacturing Example of an Acryl Resin (a-5) Having no Acetoacetyl Group.

The resin was manufactured using the same device and operations as in the case of manufacture of (a-1) in accordance with the following composition.

| | | |
|---|---|---|
| (1) | Isopropyl alcohol | 75.0 parts by wt |
| (2) | Ethylene glycol dimethacrylate | 0.2 part by wt |
| (3) | n-Butyl acrylate | 12.7 parts by wt |
| (4) | Methyl methacrylate | 24.3 " |
| (5) | Styrene | 30.0 " |
| (6) | 2-Hydroxyethyl acrylate | 6.4 " |
| (7) | Acrylic acid | 6.4 " |
| (8) | Azobisisobutyronitrile | 1.0 part by wt |
| (9) | Azobisisobutyronitrile | 0.2 " |

A transparent and viscous resin liquid with a resin solid content of 56.6% and an acid value of 50 (mg KOH/g resin solid) was obtained.

### Example 1.

Manufacturing Example of a Microgel-Containing Water Dispersible Resin Composition and an Electrodeposition Coating Composition Containing Said Resin Composition.

| | | |
|---|---|---|
| (1) | A resin liquid of (a-1) | 177.9 parts by wt |
| (2) | Triethylamine | 7.2 " |
| (3) | Deionized water | 202.1 " |
| (4) | Formalin (35% aq soln of formaldehyde) | 1.2 " |

(2), (3) and (4) were poured into (1) of 30°C and the mixture was stirred for one hour until it was homogenized, then heated up to 80°C, stirred for two hours more and cooled.

A turbid aqueous dispersion of a microgel-containing anionic water-dispersible resin composition with a resin solid content of 25%, pH of 7.2 and specific resistance of liquid of 1080 Ω.cm at 22°C was obtained.
(i) Solubility Test in Acetone for Confirmation of the Microgel Particles.
   Acetone (100 g) was added to 10 g of the resulting aqueous dispersion and a change in the turbidity was checked by naked eye. When microgels were produced, the mixture was turbid.
(ii) Measurement of Gel Fraction and Hardness for Confirmation of the Microgel Particles.
   The resulting aqueous dispersion was applied on a glass plate using a bar coater to a thickness of 15 µm and dried with hot air of 50°C for three hours to evaporate water and the solvent whereupon the pencil hardness of the residue was measured and the weight (α) at that time was measured too. The residue after drying upon heating was dipped in a mixture of methanol and acetone (1/1 by weight) at 20°C for 24 hours, dried again with hot air of 50°C for three hours and the weight (β) was measured. A gel partition (%) was defined as (β/α) x 100. Incidentally, the measurement may be done by conducting a measurement after mixing with a resin having a known gel partition followed by comparing it with the result of a blank test.
(iii) Electrodeposition for Confirmation of the Microgel Particles.
   A monomer composition comprising styrene, methyl methacrylate, n-butyl acrylate, ethyl acrylate, hydroxyethyl acrylate and acrylic acid was subjected to a reaction by a conventional method using isopropyl alcohol as a reaction solvent and azobisisobutyronitrile as a catalyst. An acryl resin liquid with a solid content of 65% and an acid value of 60 (mg KOH/g resin solid) was obtained. The acryl resin was mixed with butoxymethylolmelamine (MX-40 manufactured by Sanwa Chemical) in a ratio of 70/30 and the mixture was neutralized with triethylamine followed by diluting with water to give an electrodeposition bath with NV of 8% and pH of 9.1.
   The above-prepared aqueous dispersion was added to this electrodeposition bath to make the solid content 30% and the mixture was placed in a three-liter vessel made of polyvinyl chloride. SUS-304 was used as a cathode while, with respect to an anode (the thing to be coated), an aluminum alloy plate (6063 S) was subjected to an anodic oxidation (thickness of anodized aluminum film: 9 µm), further subjected to an electrolytic coloration in black and then washed with warm water by a usual method. Electric current was applied by a usual manner wherein a bath temperature was 22°C, a distance between electrodes was 12 cm and a electrode ratio (+/-) was 2/1 to make the coat thickness 10 µm at 170 volts, then washed, baked at 180°C for 30 minutes and dried. Glaziness and film thickness were measured.
(iv) Spray Coating for Confirmation of the Microgel Particles.
   The above-prepared aqueous dispersion was added to an aqueous emulsion paint of a type drying at ambient temperature and containing inorganic white pigment and yellow pigment to make a solid content 30%. This was applied using a spray coating machine to a slate plate (thickness: 5 mm) having a hole of 1 cm diameter placed vertically to make the thickness of a dry film 20 µm. This was dried at room temperature and the length of lagging of the coated composition (unit: mm) from the above-mentioned hole was observed. Humidity was made constant at 70%.

### Examples 2-4.

The same operations as in Example 1 were carried out using the compositions as shown in Table 1. The result is given in Table 1.

### Comparative Examples 1-3.

The same operations as in Example 1 were carried out using the compositions as shown in Table 2. The result is given in Table 2.

**Table 1**

| | Examples | | | |
|---|---|---|---|---|
| | 1 | 2 | 3 | 4 |
| Composition (% by weight) | | | | |
| (A) Resin Composition having Acetoacetyl and Carboxyl Groups: | | | | |
| (a-1) | 177.9 | | | |
| (a-2) | | 176.2 | | |
| (a-3) | | | 177.9 | |
| (a-4) | | | | 177.9 |
| (B) Amines: (Triethylamine) | 7.2 | 7.2 | 7.2 | 7.2 |
| (C) Aldehydes: (35% Aq HCHO soln) | 1.2 | 1.2 | 1.2 | 1.2 |
| Properties of Aqueous Dispersion | | | | |
| Resin solid (%) | 25 | 26 | 25 | 25 |
| pH | 7.2 | 7.3 | 7.3 | 7.1 |
| Specific resist (Ω.cm) | 1080 | 1020 | 1100 | 1000 |
| Particle size (nm) *1 | 130 | 120 | 100 | 150 |
| Storage stability *2 | o | o | o | o |
| Confirmation Test for Microgel Particles | | | | |
| (a) Soly in acetone | turb | turb | turb | turb |
| (b) Gel partition(%) | 59 | 60 | 57 | 56 |
| Hardness | H | H | H | H |
| (c) Gloss (60% mirror reflection) | 29 | 30 | 28 | 32 |
| Film thickness (µm) | 10 | 10 | 11 | 10 |
| External appearance | good | good | good | good |
| (d) Length of sagging (mm) | 3.1 | 3.2 | 2.9 | 2.5 |
| turb: turbidity continued | | | | |

**Table 2**

| | Comparative Examples | | |
|---|---|---|---|
| | 1 | 2 | 3 |
| Composition (% by weight) | | | |
| (A) Resin Composition having Acetoacetyl and Carboxyl Groups: | | | |
| (a-1) | | 177.9 | 177.9 |
| (a-5) | 176.2 | | |
| (B) Amines: | | | |
| (Triethylamine) | 7.2 | | 7.2 |
| (C) Aldehydes: | | | |
| (35% Aq HCHO soln) | 1.2 | 1.2 | |
| Properties of Aqueous Dispersion | | # | |
| Resin solid (%) | 25 | | 26 |
| pH | 7.3 | | 7.2 |
| Specific resist (Ω.cm) | 1100 | | 1090 |
| Particle size (nm) *1 | 130 | | 140 |
| Storage stability *2 | o | | o |
| Confirmation Test for Microgel Particles | | # | |
| (a) Soly in acetone | transp | | transp |
| (b) Gel partition(%) | 15 | | 13 |
| Hardness | B | | B |
| (c) Gloss (60% mirror reflection) | 75 | | 80 |
| Film thickness (µm) | 10 | | 11 |
| External appearance | good | | good |
| (d) Length of sagging (mm) | 6.8 | | 7.0 |
| transp: turned transparent | | | |
| #: coagulated | | | |

| | | | |
|---|---|---|---|
| *1: measured by LPA-3000/3100 manufactured by Otsuka Denshi KK | | | |
| *2: the state after allowing to stand at 20°C for one hour was checked | | | |

### (Merit of the Invention)

In accordance with a composition of the present invention, microgels can be obtained in water without the compulsory and mechanical disintegrating means and, in addition, a homogeneous dispersibility in water is excellent. Accordingly, it is now possible to afford a microgel-containnig anionic water-dispersible resin composition wherein the microgel *per se* has a good electrophoreticability in conducting an electrodeposition coating and being able to be used as an aqueous paint and a highsoid paint as well and also to afford an electrodeposition coating composition containing said resin composition.

## Claims

1. A microgel-containing anionic water-dispersible resin composition containing (A) a synthetic resin having acetoacetyl groups and carboxyl groups, (B) an amine and water and (C) an aldehyde.

2. A microgel-containing anionic water-dispersible resin composition according to claim 1 in which the synthetic resin is an acryl resin.

3. A microgel-containing anionic water-dispersible resin composition according to claim 1 in which the synthetic resin is a fluororesin.

4. A microgel-containing anionic water-dispersible resin composition according to claim 1 in which the synthetic resin is a polyester resin.

5. An electrodeposition coating composition which comprises the microgel-containing anionic water-dispersible resin composition according to any one of claims 1 to 4.

6. An electrodeposition coating composition according to claim 5 in which the composition is an ultraviolet light curable electrodeposition coating composition.

## Patentansprüche

1. Mikrogel enthaltende anionische, wasserdispergierbare Harzzusammensetzung, die folgende Bestandteile enthält:
(A) ein synthetisches Harz, das Acetacetylgruppen und Carboxylgruppen aufweist;
(B) ein Amin und Wasser und
(C) ein Aldehyd.

2. Mikrogel enthaltende anionische, wasserdispergierbare Harzzusammensetzung nach Anspruch 1, in der das synthetische Harz ein Acrylharz ist.

3. Mikrogel enthaltende anionische, wasserdispergierbare Harzzusammensetzung nach Anspruch 1, in der das synthetische Harz ein Fluorharz ist.

4. Mikrogel enthaltende anionische, wasserdispergierbare Harzzusammensetzung nach Anspruch 1, in der das synthetische Harz ein Polyesterharz ist.

5. Zusammensetzung zur galvanischen Beschichtung, welche die Mikrogel enthaltende anionische, wasserdispergierbare Harzzusammensetzung nach einem der Ansprüche 1 bis 4 aufweist.

6. Zusammensetzung zur galvanischen Beschichtung nach Anspruch 5, bei der die Zusammensetzung eine Zusammensetzung zur galvanischen Beschichtung ist, die durch Ultraviolettlicht aushärtbar ist.

## Revendications

1. Composition à base de résine anionique dispersable dans l'eau, contenant un microgel, qui contient :
(A) une résine synthétique ayant des groupes acétoacétyle et des groupes carboxyle,
(B) une amine et de l'eau, et
(C) un aldéhyde.

2. Composition à base de résine anionique dispersable dans l'eau, contenant un microgel, selon la revendication 1, dans laquelle la résine synthétique est une résine acrylique.

3. Composition à base de résine anionique dispersable dans l'eau, contenant un microgel, selon la revendication 1, dans laquelle la résine synthétique est une résine fluorée.

4. Composition à base de résine anionique dispersable dans l'eau, contenant un microgel, selon la revendication 1, dans laquelle la résine synthétique est une résine de polyester.

5. Composition pour revêtement par dépôt électrolytique, qui comprend la composition à base de résine anionique dispersable dans l'eau, contenant un microgel, selon l'une quelconque des revendications 1 à 4.

6. Composition pour revêtement par dépôt électrolytique selon la revendication 5, qui est une composition pour revêtement par dépôt électrolytique, durcissable par les rayons ultraviolets.
